# EUROPEAN PATENT SPECIFICATION

(11) **EP 1 051 903 B1**
(45) Date of publication and mention of the grant of the patent: **13.09.2006**
(21) Application number: 00201662.4
(22) Date of filing: 09.05.2000
(51) Int. Cl.: A01J 27/02, A23C 19/16

(54) **Multilayered cheese coating**
Mehrlagiger Käseüberzug
Enrobage de fromage multicouches

(30) Priority: 11.05.1999 NL 1012038
(43) Date of publication of application: 15.11.2000
(73) Proprietor: Friesland Brands B.V., 7943 PE Meppel (NL)
(72) Inventor: Hup, Gerhard, 8921 TX Leeuwarden (NL); Van Arem, Everhardus Jacobus Franciscus, 8802 CR Franeker (NL)
(74) Representative: Prins, Adrianus Willem

(56) References cited:
- EP-A- 0 593 123
- EP-A- 0 594 258
- EP-A- 0 679 337
- EP-A- 0 811 664
- WO-A-98/25477
- US-A- 4 585 658

## Description

The invention relates to a coating layer for cheese and a method for the preparation of such a coating layer. More in particular, the invention relates to a multilayered coating for cheese and to a method for the preparation thereof. Moreover, the invention relates to the use of mono- and diglycerides for coating cheese so as to be gasproof and moistureproof.

To protect cheese against ambient influences so as to prevent, inter alia, reduction through evaporation and damage, it is often provided with a coating layer. Thus, the quality and storage life of the cheese are substantially improved, and these can be inspected. Moreover, such a coating layer can be used to improve the appearance of the cheese.

In the cheese industry such coating layers are normally based on materials consisting of one phase, such as paraffin, or of emulsions usually applied in several layers, such as cheese plastic.

Paraffin or cheese wax are particularly often used when a proper seal with respect to gas and moisture permeability of the cheese is desired. Although a coating layer of paraffin can effect a reasonable and usually acceptable gas and moisture permeability, paraffin has the drawback that it is rather soft and sticky. This makes the cheese susceptible to mechanical influences during transport or storage, during the ripening process or thereafter. This stickiness can be very disturbing and disadvantageous. Moreover, the adhesion of paraffin to the cheese is often not sufficient. In the state of the art it has been proposed to solve these problems by using emulsifiers to obtain a better adhesion between the cheese and the coating layer. Another drawback of paraffin is that it is an unnatural product unsuitable for consumption.

The above coating layers based on emulsions do not have a number of the drawbacks attached to the coating layers based on paraffin, but have the important drawback that they are not or insufficiently moisture- and gasproof. Through the loss of one of the emulsion phases after the application of the coating layer based on emulsions, for instance by drying, the layer often does not seal or seals insufficiently and is thus not sufficiently moisture- and gasproof. To yet obtain an acceptable moisture- and gasproofness, several layers must often be applied, with the result that the final coating layer can obtain an unacceptable or at least undesirable thickness. Such emulsion coating layers can, for instance, be based on polysaccharides (see, for instance, EP-A-0 594 258, in which a coating based on alginate is described), proteins (see, for instance, EP-A-0 593 123, in which a water-insoluble protein is used), polyvinyl acetate or polyethylene. They can, for instance, be applied by contacting the cheese with an aqueous suspension of the protein, the polysaccharide, the polyvinyl acetate or the polyethylene, after which the layer hardens by evaporation of the water. This contact can be effected by immersing, sprinkling, brushing the cheese with a sponge or the like, etc.

The above-mentioned coating layers are all of the single type, that is to say coatings of one material. Single coatings offer a limited protection against mechanical ambient influences and/or a limited moisture- and gasproofness. An improvement can be obtained by using coatings of different materials.

In the state of the art such coatings for cheese are known from, for instance, WO-A-98/25477. Disclosed therein is a method for applying a coating layer comprising a hydrophobic layer to the cheese with a hydrophilic layer over it. The hydrophobic layer of the coating layer according to this invention contains vegetable or animal fats. The hydrophilic layer contains polysaccharides or proteins, preferably milk proteins. To effect a good adhesion between the two layers, it is required according to the above patent application that an emulsifier is present in one of the two layers or on the interface thereof, in an amount of up to 3% based on the coating layer. In general, short-chained mono- and diglycerides are useful as emulsifier. The emulsifier preferably used according to this patent application is the mono- and diglycerides of tartaric acid.

Furthermore, German laid-open publication DE-A-3 338 492 and U.S. patent 4,585,658 issuing therefrom disclose a method for coating a cheese with a solid wax-like layer. This layer preferably contains 5-10% acetylated acetic acid esters of monoglycerides of hydrated fatty acids. Subsequently, a paraffin layer is applied over this monoglyceride layer. The function of the monoglyceride layer is provided in a good adhesion of the paraffin to the cheese and particularly to fat and soft cheeses where the adhesion particularly causes problems. To achieve this, acetic acid esters of monoglycerides are used which are built up from fatty acid residues of exclusively saturated fatty acids.

The coating layer obtained according to this laid-open application, however, is not moisture- and gasproof, because these layers are intended for cheeses which still have to ripen further, in which connection particularly according to this document a good gas permeability is necessary. In practice, the use of paraffin according to this document appears to involve another drawback, i.e. the contamination of the paraffin bath through monoglyceride during the application through immersion. This impedes the industrial preparation of cheeses provided with such a coating. According to this document the monoglycerides used are applied in liquid form at a temperature of 45-60°C.

For the cheeses of the present invention a moistureproof layer is particularly important to the weight retention of the cheese, while a gasproof layer is important to the prevention of the mold growth under the coating layer. A coating layer for cheeses which is both gasproof and moistureproof is therefore highly important.

None of the above-mentioned publications provides a cheese coating which is sufficiently moisture- and gasproof and, in addition, offers sufficient resistance to ambient influences.

It has now been found that a cheese having a gasproof and moistureproof coating layer which solves the above-mentioned problems can be obtained by including an intermediate layer in this coating layer, which intermediate layer is substantially gas- and moistureproof and substantially consists of specific solid mono- and diglycerides, in particular acetylated mono- and diglycerides, on the exterior of which intermediate layer are present one or more supplementary layers applied from an emulsion. 'Solid' substantially means solid at room temperature. The intermediate layer essentially contributes to the moisture- and gasproofness of the coating layer, with the result that the use of paraffin with the attendant drawbacks can be left out. The supplementary layer or layers are applied from an emulsion, e.g. emulsions of polysaccharides such as alginate, proteins, polyvinyl acetate or polyethylene. Preferably, cheese plastic is used for the supplementary layer.

More in particular, according to the invention a cheese is obtained in which the advantageous properties of known paraffin layers and layers obtained from an emulsion such as cheese plastic are combined.

A cheese having such an intermediate layer enables excellent improved properties as compared to the properties of cheeses with coating layers known from the state of the art. The improvements relate to, for instance, the decreased sensitivity to ambient influences and sufficient elasticity and strength. In particular, the behavior of the cheese with respect to reduction through evaporation can be improved, without involving the drawbacks of other methods used for the same purpose. Thus, the paraffin layer known from the state of the art to prevent the cheese from reduction through evaporation is susceptible to damage caused by mechanical influences.

According to the invention the intermediate layer can be applied to the 'natural' rind, as it is formed during the ripening process. It is particularly advantageous, however, if the intermediate layer is applied to a sublayer. This sublayer can be applied during the ripening process. Such a sublayer can be any sublayer known to those skilled in the art, such as, for instance, cheese plastic (polyvinyl acetate), which is preferred. Besides cheese plastic the sublayer can be prepared from polysaccharides, proteins, polyvinyl acetate and polyethylene acetate.

The advantage of the use of such a sublayer is that the favorable properties thereof can be used while the intermediate layer of acetylated mono- and diglycerides partly removes the drawbacks involved in the use of a single sublayer.

By now using the intermediate layer according to the invention, it is possible to apply to the cheese a coating layer having properties which have been highly optimized and adapted to the desired application. The use of the intermediate layer further enables combinations of materials which, through their chemical and/or physical properties, usually do not adhere or adhere only with difficulty together. It will be clear that this enables a plurality of combinations which can substantially improve the properties of the coating layer.

The mono- and diglycerides which, according to the invention, are used for the intermediate layer are preferably fatty acid esters of acetylated mono- and diglycerides.

Incidentally, EP-A-0 679 337 discloses a single cheese coating comprising mono- and diacetic acid esters of different saturated mono- and diglycerides. The cheese coating according to this publication must comprise at least 40-57 wt.% diacetic acid ester and 40-50 wt.% monoacetic acid esters of mono- and diglycerides. Because this involves a single coating layer, this layer must be substantially thicker than the coating layers according to the invention to obtain a similar degree of moisture- and gasproofness. The material applications (the amount of deposited material based on the total weight of the cheese) in the examples range between 6 and 9 wt.%. Moreover, in this document the gasproofness of such layers is not recognized and/or is not deemed important. Nor does this document mention or suggest the possibility of applying a supplementary layer, the advantages of which will be discussed below.

To obtain a moisture- and gasproof layer having a sufficient strength at room temperature, in particular mono- and diglycerides having a melting temperature above 30°C are suitable. Preferably suitable as monoglycerides, however, are mixtures of monoglycerides of differently composed molecules, that is to say with different acetylation degrees and different chains and different chain lengths of the fatty acid groups. Such mixtures can be supplemented with the same result by mixtures of diglycerides, which can also have different acetylation degrees and different chains and different chain lengths of the fatty acid groups. Such mixtures of different compounds often show a melting range instead of a melting point. It has been found that such mixtures lead to a robust system if the liquid products have a melting range starting at about 30°C and continuing to at least above 40°C, for instance to 50°C, preferably to 45°C. When the mono- and diglycerides in molten condition have too low a viscosity, this leads to a thin coating which, moreover, will easily break or tear. This impedes the application of a good and sealing outer coating layer. In general, a superior intermediate layer is obtained, that is to say a more robust layer having better barrier properties with respect to gas- and moistureproofness, if the molten mono- and diglyceride has a higher viscosity. The elasticity of the intermediate layer is then higher, which has the result that this layer forms a more stable substratum for the outer layer.

Preferably suitable compounds for the intermediate layer according to the invention are monoacetic acid mono- and diglycerides built up from unsaturated fatty acids having a chain length of more than 10.

The thickness of the intermediate layer is generally such that the material application is not more than 2 wt.%. This depends, inter alia, on the size and shape of the cheese. With large cheeses the material application will usually be lower in weight percents based on the cheese than with smaller cheeses. The minimum amount of material is the amount in which the gas- and moistureproofness is adequate, for instance 0.5 wt.% and preferably at least 1 wt.%.

As stated before, a cheese provided with such an intermediate layer substantially consisting of mono- and diglycerides can be excellently coated with a supplementary layer. This supplementary layer can have both a hydrophilic and a hydrophobic character. Without wishing to be tied down to any theory, the fact that both hydrophobic and hydrophilic materials can adhere to the mono- and diglyceride layer seems to be the result of the combination of the polar and non-polar characters which the mono- and diglycerides unite in themselves. The fatty acids in the glyceride have a long, non-polar tail, while the polar head of the molecule is formed by the acetylated mono- and diglyceride. Incidentally, according as the fatty acid tail is longer, the mono- and diglyceride will have a more polar character. In general, this results in a highly moisture- and gasproof layer.

According to the invention the supplementary layer comprises a material obtained from an emulsion, for instance cheese plastic. Suitable emulsions are aqueous emulsions of the above polysaccharides such as alginate, proteins, polyvinyl acetate or polyethylene in which various additives may be present. Cheese plastic is understood to mean a material comprising polyvinyl acetate. Such cheese plastic is known to those skilled in the art and is often used in cheeses having a hard rind, such as Gouda or Edam cheese. The cheese plastic is supplied as an aqueous emulsion of polyvinyl acetate to which are further added, for instance, preserving agents such as natamycin, dyestuffs and/or acidity regulator such as acetic acid. After the application of the emulsion by means of brushing, immersing, etc., the emulsions is dried. This drying normally takes a few hours to days and results in the formation of the coating layer.

The cheese according to the invention has the important additional advantage that fillers can be easily absorbed in the supplementary layer, without necessarily affecting the moisture- and gasproofness of the coating layer and, moreover, without necessarily affecting the quality of the cheese, for this is shielded by the glyceride layer.

Such fillers can be used, for instance, to further improve the sensitivity to ambient influences. Another effect of the use of fillers is that the dry matter content of the layer is increased. When the coating layer is applied in liquid form, a higher dry matter content means that it can dry more rapidly. Also, the higher dry matter content can reduce the content of preserving agents.

Moreover, the use of fillers results in that the texture of the cheese rind can be influenced. In this manner the cheese can be given a slightly rough and mat exterior. The increased roughness will cause the cheese to be more easily manageable during automatic transport or processing, such as on conveyer belts or other types of automated apparatus. An additional favorable effect is that the cheese becomes a traditional appearance, which is appreciated by consumers.

Different materials are suitable for use as filler. Thus, the use of silicates or carbonates as filler can influence the moisture regulation of the coating layer. Preferably, the silicates suitable as filler are selected from the group comprising quartz, zeolite, lapis lazuli, sepionite, perlite, polysilicic acid, talc, orthosilicate, glass, porcelain, kieselguhr and diatomaceous earth. The carbonates suitable as filler are preferably alkali metal carbonates and/or alkaline earth metal carbonates, such as Na₂CO₃, K₂CO₃, NaHCO₃ and CaCO₃.

It is also possible to use fibers as filler. This can impart a roughness to the outer layer of the foodstuff, which offers advantages during the industrial processing of such a cheese, for instance by improving the frictional properties on conveyer belts and the like. An additional effect is that the cheese becomes a nice mat appearance, and that the color can thus be improved. Suitable fibers are, for instance, wood fibers, paper pulp, cotton and other cellulose materials. Incidentally, an increased roughness can also be obtained by the use of the above-mentioned silicates or carbonates.

Other possible fillers are thickeners. These fillers are, for instance, suitable for further improving the rigidity, elasticity and/or strength of the coating layer, but can also be used to influence the moisture regulation of the coating layer. Besides the above-mentioned fillers, thickeners suitable for the purpose are, inter alia, carboxymethyl cellulose, alginates, xanthane, modified or non-modified starch, etc.

Preferably, the content of filler is at most 70 wt.% based on the total weight of the supplementary layer, most preferred is a filler content ranging between 16 and 33 wt.%.

A cheese according to the invention can be prepared by a method comprising the steps of melting one or more of the above mono- and one or more diglycerides which are solid at room temperature, followed by
a) contacting a cheese during or after the ripening of this cheese with the above mono- and diglycerides in molten condition, which cheese is optionally already conventionally provided with a sublayer, which sublayer preferably comprises cheese plastic,
b) applying from an emulsion at least one supplementary layer which optionally comprises at least one filler.

In the method according to the present invention step a) is preferably carried out at a temperature which is high enough to obtain a sufficiently thin layer. Preferably, this is carried out at a temperature of 70°C or more and more preferably at a temperature of 110°C or more. Because the mono- and diglycerides are not allowed to catch fire or to be evaporate and/or disintegrate, the temperature must not be too high. Preferably, the temperature is therefore not higher than about 150°C.

It can be advantageous if the cheese for step a) is already conventionally provided with a sublayer, for instance a sublayer of cheese plastic.

Step b) can be carried out by contacting the cheese already coated with an intermediate layer with the liquid form of the emulsion material, if required comprising the filler, for the supplementary layer.

Contacting the cheese with the material for the respective layers in both step a) and step b) can be carried out in the conventional manner known to those skilled in the art for the application of layers to cheeses, for instance by contacting the cheese with the above starting materials by dipping, sprinkling or pouring over.

Not only can the filler be applied by mixing it into the material for the supplementary layer when in liquid form, but it is also possible to apply it to the not yet hardened supplementary layer by scattering or atomizing, after the supplementary layer has already been applied to the intermediate layer.

The invention is also characterized by the use of acetylated mono- and diglycerides in an intermediate layer for the gasproof and moistureproof coating of cheese.

Cheeses particularly suitable for being provided with a coating according to the invention are cheeses of the semi-hard type, such as, for instance, Gouda and Edam cheese.

The invention will now be explained with reference to a number of non-limitative examples. Where percents are mentioned, this is always understood to mean a weight percentage, unless otherwise indicated.

### Example 1

A batch of Edam cheese in spherical form was traditionally prepared and ripened until an age of 6 weeks. In the time between the brine bath and this age the cheeses were given, as usual distributed over time, four mechanical all-sided treatments on apparatus known in the cheese industry with a cheese rind coating agent on the basis of polyvinyl acetate (also referred to in the cheese industry as cheese plastic). The cheese plastic has a light yellow color through the addition of annatto dyestuff.

At the above age of 6 weeks the thus ripened cheeses received an intermediate layer by means of a short immersion for a few seconds in a bath maintained at a temperature of 120°C of acetylated mono- and diglycerides (E472a) having a melting range of 35 to 45°C. After weighing the material application appeared to vary between 1.5 and 2.0%.

Following the immersing treatment the cheeses were mechanically given four half-sided treatments on apparatus provided with lamellas, also known in the cheese industry, with a cheese rind coating agent colored red with lithol rubine, on the basis of polyvinyl acetate (cheese plastic). The mechanical application of the cheese plastic to the intermediate layer proceeded without any problem. Between the separate treatments the freshly applied cheese plastic was given sufficient time for drying. After drying the thus applied cheese plastic layer appeared to adhere excellently to the intermediate layer. The treated cheeses had the desired red color, were not sticky at room temperature such as cheese treated with paraffin wax and could be packed in boxes without further protection. The cheeses protected in the above-described manner are packed in cardboard boxes and stored in cooled condition, as for forwarding to the buyer. The quality of the cheese was periodically inspected, and the appearance was judged for the formation of mold. The total loss in weight during the storage period of more than two months appeared to be less than a half percent. The quality of the cheese remained good, and even at the end of the storage period the appearance of the cheese was still nice glossy red without formation of mold.

### Example 2

A batch of Gouda cheese of 4.5 kg, which was also traditionally prepared and ripened until an age of 4 weeks, was provided with an intermediate layer.

Until the time of treatment the cheeses were treated with a total of two thin layers of cheese plastic. The intermediate layer was applied in a manner comparable to that of Example 1 by means of a short immersion, now in a bath maintained at a temperature of 135°C of acetylated mono- and diglycerides (E472a) with a melting range of 41 to 46°C. The average material application appeared to be 1.7%.

To protect the intermediate layer, this cheese, too, was mechanically provided immediately afterwards with a layer of yellow cheese plastic. Again it could be established that after drying the thus applied cheese plastic layer appeared to adhere excellently to the intermediate layer. The treated cheeses had the desired yellow color, were not sticky at room temperature such as cheese treated with paraffin wax and could be transported without further protection.

This cheese, too, was stored in cooled condition and judged periodically. The loss in weight was negligibly small during the storage period, and the appearance remained glossy yellow without any treatment and without the occurrence of mold growth.

### Example 3

In a subsequent experiment to Example 2 a batch of Gouda cheese was provided with a rough coating layer after the application of the above layer of acetylated mono- and diglycerides.

The material for this rough coating layer was obtained by adding to a commercial cheese plastic reparation 5% sawdust from which the coarse parts were removed by sieving. The mixture was given the desired yellow color with annatto and appeared to be properly applicable with half-sided treatments on the apparatus provided with lamellas, known in the cheese industry. If necessary, the mixture was slightly diluted by adding water.

After drying it appeared that the thus applied coating adhered excellently to the intermediate layer of acetylated monoglycerides and was therefore also integral with the cheese. The cheese had a rough rind having a traditional appearance and nevertheless giving a good protection against loss in weight through evaporation during storage and transport.

### Example 4

In a subsequent experiment to Example 1 a batch of Edam cheese was provided with a rough coating layer after the application of the above layer of acetylated mono- and diglycerides.

The material for this rough coating layer was obtained by adding 3% paper pulp to a commercial cheese plastic preparation. The mixture was given the desired red color with lithol rubine and appeared to be properly applicable with half-sided treatments on the apparatus provided with lamellas, known in the cheese industry. If necessary, the mixture was slightly diluted by adding water.

After drying it appeared that the thus applied coating adhered excellently to the intermediate layer of acetylated mono- and diglycerides and was therefore also integral with the cheese. The cheese had a rough rind having a traditional appearance and nevertheless giving a good protection against loss in weight through evaporation during storage and transport.

## Claims

1. A cheese provided with a coating layer, which coating layer comprises a substantially gasproof and moistureproof intermediate layer, which intermediate layer substantially consists of solid mono- and diglycerides, on the exterior of which intermediate layer is present at least one supplementary layer applied from an emulsion.

2. A cheese according to claim 1, wherein the supplementary layer comprises cheese plastic.

3. A cheese according to any of the preceding claims, wherein the mono- and diglycerides have a melting range beginning at 30°C or more and not ending below 40°C.

4. A cheese according to any of the preceding claims, wherein the mono- and diglycerides comprise fatty acid esters of acetylated glyceride which are preferably built up from unsaturated fatty acids having a chain length of more than 10.

5. A cheese according to any of the preceding claims, wherein a layer of cheese plastic is applied between the cheese and the intermediate layer.

6. A cheese according to any of the preceding claims, wherein at least one of the supplementary layers comprises a filler, which filler is selected from the group consisting of silicates preferably selected from the group comprising quartz, zeolite, lapis lazuli, sepionite, perlite, polysilicic acid, talc, orthosilicate, glass, porcelain, kieselguhr and diatomaceous earth; carbonates preferably selected from the group comprising quartz, alkali metal carbonates, alkaline earth metal carbonates and mixtures thereof; thickeners; fibers; and mixtures thereof.

7. A method for applying a coating layer to cheese, comprising the steps of melting one or more mono- and one or more diglycerides which are solid at room temperature, followed by a) contacting a cheese during or after the ripening of this cheese with the above mono- and diglycerides in at least partly molten form, b) applying from an emulsion at least one supplementary layer which optionally comprises at least one filler.

8. A method according to claim 7, wherein step a) is carried out at a temperature of 70°C or more and preferably at a temperature ranging between 110°C and 150°C.

9. A method according to any of the preceding claims 7-8, wherein steps a) and b) are carried out by contacting the cheese with the at least partly liquid starting materials by immersing, sprinkling or pouring over.

10. A method according to any of the preceding claims 7-9, wherein the filler is applied when the supplementary layer is liquid.

11. A method according to any of the preceding claims 7-10, wherein the mono- and diglycerides are selected from the group of compounds as defined in claims 3-4, wherein the supplementary layer is composed as defined in claim 2, and/or wherein a filler as defined in claim 6 is used.

12. The use of acetylated mono- and diglycerides as intermediate layer between the cheese and a supplementary layer applied from an emulsion for the gasproof and moistureproof coating of cheese.

## Patentansprüche

1. Käse mit einer Überzugsschicht, die eine im Wesentlichen gas- und feuchtigkeitsdichte Zwischenschicht aufweist, welche im Wesentlichen aus festen Mono- und Diglyceriden besteht, wobei auf dem Äußeren der Zwischenschicht eine zusätzliche Schicht vorgesehen ist, die aus einer Emulsion aufgebracht ist.

2. Käse nach Anspruch 1, bei dem die zusätzliche Schicht Käsekunststoff enthält.

3. Käse nach einem der vorhergehenden Ansprüche, bei dem die Mono- und Diglyceride einen Schmelzbereich beginnend bei 30°C oder höher und nicht endend unterhalb von 40°C aufweisen.

4. Käse nach einem der vorhergehenden Ansprüche, bei dem die Mono- und Diglyceride Fettsäureester von acetylierten Glyceriden aufweisen, die vorzugsweise aus ungesättigten Fettsäuren mit einer Kettenlänge von mehr als 10 aufgebaut sind.

5. Käse nach einem der vorhergehenden Ansprüche, bei dem eine Schicht aus Käsekunststoff zwischen dem Käse und der Zwischenschicht aufgetragen ist.

6. Käse nach einem der vorhergehenden Ansprüche, bei dem mindestens eine der zusätzlichen Schichten einen Füllstoff enthält, wobei der Füllstoff ausgewählt ist aus einer Gruppe bestehend aus Silikaten, vorzugsweise ausgewählt aus einer Gruppe beinhaltend Quarz, Zeolith, Lapislazuli, Sepionit, Perlit, Polykieselsäure, Talk, Orthosilikat, Glas, Porzellan, Kieselgur und Diatomeneerde; Karbonate vorzugsweise ausgewählt aus der Gruppe beinhaltend Quarz, Alkalimetallkarbonate, Erdalkalimetallkarbonate sowie Mischungen hiervon; Verdicker; Fasern; und Mischungen hiervon.

7. Verfahren zum Aufbringen einer Überzugsschicht auf Käse, beinhaltend die Schritte Schmelzen eines oder mehrerer Mono- und eines oder mehrerer Diglyceride, welche bei Raumtemperatur fest sind, gefolgt von a) Kontaktieren eines Käses während oder nach des Reifeprozesses dieses Käses mit den zuvor genannten Mono- und Diglyceriden in zumindest zum Teil geschmolzener Form, b) Auftragen mindestens einer zusätzlichen Schicht, die optional mindestens einen Füllstoff enthält, aus einer Emulsion.

8. Verfahren nach Anspruch 7, bei dem Schritt a) ausgeführt wird bei einer Temperatur von 70°C oder höher und vorzugsweise in einem Temperaturbereich zwischen 110°C und 150°C.

9. Verfahren nach einem der Ansprüche 7 oder 8, bei dem die Schritte a) und b) ausgeführt werden durch Kontaktieren des Käses mit den zumindest zum Teil flüssigen Startmaterialien durch Eintauchen, Berieseln oder Übergießen.

10. Verfahren nach einem der Ansprüche 7 bis 9, bei dem der Füllstoff aufgebracht wird, wenn die zusätzliche Schicht flüssig ist.

11. Verfahren nach einem der Ansprüche 7 bis 10, bei dem Mono- und Diglyceride ausgewählt werden aus einer Gruppe von Verbindungen, die in den Ansprüchen 3 bis 4 definiert sind, wobei die zusätzliche Schicht zusammengesetzt ist, wie in Anspruch 2 definiert und/oder wobei ein Füllstoff, wie dieser in Anspruch 6 definiert ist, gebraucht wird.

12. Verwendung von acetylierten Mono- und Diglyceriden als Zwischenschicht zwischen dem Käse und einer zusätzlichen Schicht, welche aus einer Emulsion aufgetragen wird, um den Käse gasdicht und feuchtigkeitsdicht zu überziehen.

## Revendications

1. Fromage muni d'une couche d'enrobage, laquelle couche d'enrobage comprend une couche intermédiaire, sensiblement étanche aux gaz et à l'humidité et principalement constituée de monoglycérides et diglycérides solides, et sur le côté externe de laquelle a été appliquée au moins une autre couche supplémentaire formée à partir d'une émulsion.

2. Fromage conforme à la revendication 1, dans lequel la couche supplémentaire comprend un plastique à fromage.

3. Fromage conforme à l'une des revendications précédentes, dans lequel les monoglycérides et diglycérides fondent dans un intervalle de température qui commence à 30 °C ou plus et ne finit pas au-dessous de 40 °C.

4. Fromage conforme à l'une des revendications précédentes, dans lequel les monoglycérides et diglycérides comprennent des esters d'acide gras de glycérides acétylés qui sont de préférence constitués d'acides gras insaturés à chaîne longue de plus de 10 atomes de carbone.

5. Fromage conforme à l'une des revendications précédentes, dans lequel une couche de plastique à fromage a été appliquée entre le fromage et la couche intermédiaire.

6. Fromage conforme à l'une des revendications précédentes, dans lequel au moins l'une des couches supplémentaires contient une charge, laquelle charge est choisie dans l'ensemble formé par les silicates, de préférence choisis parmi les quartz, zéolithes, lapis-lazuli, sépionite, perlite, polyacides siliciques, talc, orthosilicates, verres, porcelaines, terres d'infusoires et terres à diatomées, les carbonates, de préférence choisis parmi les carbonates de métal alcalin ou de métal alcalino-terreux et leurs mélanges, les épaississants, les fibres, et les mélanges de telles charges.

7. Procédé d'application d'une couche d'enrobage sur du fromage, qui comporte une étape consistant à faire fondre un ou plusieurs monoglycérides et un ou plusieurs diglycérides qui sont solides à température ambiante, suivie
a) d'une étape où l'on met un fromage, pendant ou après son affinage, en contact avec lesdits monoglycérides et diglycérides, au moins en partie fondus,
b) et d'une étape où l'on applique au moins une couche supplémentaire, formée à partir d'une émulsion et contenant, en option, au moins une charge.

8. Procédé conforme à la revendication 7, dans lequel on effectue l'étape (a) à une température d'au moins 70 °C, et de préférence à une température de 110 à 150 °C.

9. Procédé conforme à l'une des revendications 7 et 8 précédentes, dans lequel on effectue les étapes (a) et (b) en mettant le fromage en contact avec les matières premières, au moins en partie liquides, par immersion, aspersion ou déversement.

10. Procédé conforme à l'une des revendications 7 à 9 précédentes, dans lequel on utilise une charge si la couche supplémentaire est liquide.

11. Procédé conforme à l'une des revendications 7 à 10 précédentes, dans lequel les monoglycérides et diglycérides sont choisis dans l'ensemble de composés défini dans les revendications 3 et 4, la couche supplémentaire est constituée conformément à la revnedication 2, et/ou l'on emploie une charge du type défini dans la revendication 6.

12. Emploi de monoglycérides et diglycérides acétylés pour former une couche intermédiaire entre un fromage et une couche supplémentaire formée par application d'une émulsion, en vue de doter le fromage d'un revêtement étanche aux gaz et à l'humidité.
